# FASCICULE DE BREVET EUROPEEN

(11) **EP 3 029 573 B1**
(45) Date de publication et mention de la délivrance du brevet: **19.04.2017**
(21) Numéro de dépôt: 15192753.0
(22) Date de dépôt: 03.11.2015
(51) Int. Cl.: G06F 11/34, H04L 12/26, G06F 11/30

(54) **SYSTEME ET METHODE DE TEST DE PERFORMANCES D'UNE INFRASTRUCTURE INFORMATIQUE**
SYSTEM UND METHODE ZUM TESTEN DER LEISTUNGSFÄHIGKEIT EINER INFORMATIK-INFRASTRUKTUR
SYSTEM AND METHOD FOR TESTING THE PERFORMANCE OF A COMPUTING INFRASTRUCTURE

(30) Priorité: 25.11.2014 FR 1461455
(43) Date de publication de la demande: 08.06.2016
(73) Titulaire: Bull S.A.S., 78340 Les Clayes-sous-Bois (FR)
(72) Inventeur: DEMEILLIEZ, Bruno, 38330 MONTBONNOT SAINT MARTIN (FR); MENIGOT, Gilles, 38190 FROGES (FR); ROY, Bernard, 38140 BEAUCROISSANT (FR)
(74) Mandataire: Demulsant, Xavier

(56) Documents cités:
- EP-A1- 2 770 439
- US-A1- 2002 198 984
- US-A1- 2006 195 725
- US-A1- 2006 276 997

## Description

L'invention a trait aux tests de performances d'infrastructures informatiques. Plus précisément, l'invention concerne la simulation d'activité d'utilisateurs en différentes zones de ces infrastructures.

Par infrastructure informatique on entend, ici, tout système d'information comprenant des ressources matérielles, telles des serveurs et/ou des bases de données. Couramment, ces ressources matérielles proposent à des utilisateurs au moins un service mis en oeuvre par des ressources logicielles, par exemple via une ou plusieurs applications déployées sur des serveurs de l'infrastructure informatique.

La réalisation de tests de performances dans une infrastructure informatique permet, à tout moment du cycle de vie de l'infrastructure, par exemple durant son développement ou après sa modification, d'évaluer le comportement des applications et des ressources matérielles mises en oeuvre dans celle-ci. Le comportement des applications et des ressources matérielles est notamment évalué en fonction de leurs sollicitations par des requêtes simultanées émises par différents utilisateurs.

Afin de valider les performances (ex : latence, temps de réponse, taux d'erreurs, qualité de service restitué) des applications ou des ressources matérielles déployées dans l'infrastructure informatique, il est donc nécessaire de pouvoir simuler via des scénarios de tests l'activité réelle des utilisateurs.

De nombreuses applications informatiques, à titre d'exemples des services de messagerie, des services de commande en ligne, ou encore des services bancaires, offrent des services de type « service clientèle » et « service d'appui », désignés couramment sous les anglicismes *«front-office* » et « *back-office ».*

Pour une application déployée dans une infrastructure informatique, les utilisateurs des services « *front-office* » de l'application sont généralement ses utilisateurs finaux, par exemple les clients d'une entreprise, tandis que les utilisateurs des services « *front-office* » sont des administrateurs/gestionnaires des services proposés par l'application, par exemple des employés de l'entreprise. Deux types de populations d'utilisateurs peuvent donc accéder simultanément à une même application, pour des utilisations et des besoins différents.

Pour des raisons de sécurité informatique, l'accès de ces deux populations d'utilisateurs s'effectue via des zones réseau différentes de l'infrastructure informatique, ces zones étant cloisonnées entre elles afin de garantir la sécurité du système d'information de l'entreprise. Cette sécurité est couramment garantie par des équipements de sécurité informatique, tels des pare-feux. Ces derniers peuvent avoir un impact important sur la latence de l'infrastructure informatique, par exemple sur le temps de réponse et l'utilisation des ressources de serveurs requêtées par une application, ces requêtes étant fonction des besoins des utilisateurs.

Au cours de tests de performances, il s'avère donc nécessaire de prendre en compte l'accès simultané de plusieurs utilisateurs à une même application, notamment depuis différentes zones réseau de l'infrastructure informatique, en vue de simuler de manière la plus réaliste possible le comportement de l'application et des ressources matérielles déployées dans l'infrastructure informatique en production.

Pour la réalisation de tests de performances, afin de simuler des requêtes utilisateurs vers des applications, les solutions actuelles consistent à distribuer la charge d'injection sur plusieurs injecteurs de charges. Ces injecteurs de charges sont configurés pour injecter selon un scénario de test prédéfini, des requêtes à destination de l'infrastructure informatique cible, permettant ainsi de simuler des actions utilisateur.

Cependant, à ce jour, de telles solutions ne permettent pas d'effectuer la distribution de charges sur des zones différentes du réseau informatique. Notamment, ces solutions ne permettent pas de simuler des comportements différents selon les injecteurs. En effet, dans ces solutions, chaque injecteur simule un même comportement utilisateurs et souvent un même niveau de charge. Les documents US2002/0198984 et US2006/0276997 décrivent des environnements distribués permettant de tester les performances d'une application ou d'un serveur dans une seule zone réseau à l'aide d'injecteurs configurables. Un système similaire décrit dans EP2770439 prévoit en outre l'utilisation de fichiers de configuration à cet effet. Un objectif de l'invention est de répondre à l'ensemble des problèmes précités.

Un deuxième objectif de l'invention est de pouvoir simuler l'activité de plusieurs utilisateurs accédant simultanément à une même application depuis des zones réseau différentes.

L'invention porte sur un système de test de performances d'une infrastructure informatique tel que défini par la revendication indépendante 1 ainsi que sur une méthode de test de performances d'une infrastructure informatique telle que définie par le revendication indépendante 6.

A cet effet, il est proposé selon un premier aspect, un système de test de performances d'une infrastructure informatique comprenant un ordonnanceur et une pluralité d'injecteurs, chaque injecteur étant destiné à injecter des requêtes dans une zone réseau de l'infrastructure informatique, suivant un scénario de test de performances prédéfini, l'ordonnanceur étant configuré pour installer chaque injecteur dans une zone réseau prédéterminée et communiquer à chaque injecteur un scénario de test de performances prédéfini, le scénario de test de performances prédéfini étant propre à chaque injecteur, chaque zone réseau prédéterminée ainsi que chaque scénario de test de performances prédéfini étant spécifié dans un fichier de configuration fournit en entrée de l'ordonnanceur.

Avantageusement, dans ce système, le fichier de configuration comprend en outre la spécification d'une pluralité de sondes destinées à mesurer des paramètres de performances de l'infrastructure informatique dans les zones réseau prédéterminées, l'ordonnanceur étant en outre configuré pour installer et configurer ces sondes en fonction de la lecture du fichier de configuration.

Avantageusement, dans ce système, l'ordonnanceur est en outre configuré pour commander pour chaque injecteur l'exécution et l'arrêt de son propre scénario de test de performances prédéfini en fonction de la lecture du fichier de configuration.

Avantageusement, dans ce système, l'ordonnanceur est en outre configuré pour collecter des informations comprenant les paramètres de performances mesurés par chacune des sondes durant l'injection de requêtes par les injecteurs, ainsi que des journaux d'historique d'événements enregistrés par chaque injecteur.

Avantageusement, dans ce système, l'ordonnanceur est en outre configuré pour générer à partir des informations collectées, un rapport de tir relatif aux performances de l'infrastructure informatique.

Il est proposé, selon un deuxième aspect, une méthode de test de performances d'une infrastructure informatique comprenant
- une étape de réception par un ordonnanceur d'un fichier de configuration, le fichier de configuration spécifiant des zones réseau prédéfinies de l'infrastructure informatique, pour l'installation d'injecteurs, chaque injecteur étant destiné à injecter des requêtes dans une des zones réseau, suivant un scénario de test de performances prédéfini dans le fichier de configuration ;
- une étape de lecture du fichier de configuration par l'ordonnanceur ;
en fonction de la lecture du fichier de configuration
- une étape d'installation et de configuration des injecteurs par l'ordonnanceur ;
- une étape de commande de chaque injecteur par l'ordonnanceur, commandant l'exécution et l'arrêt de chaque scénario de tests de performances prédéfini pour chaque injecteur.

Avantageusement, cette méthode comprend en outre une étape d'installation et de configuration de sondes par l'ordonnanceur, en fonction de la lecture du fichier de configuration, chaque sonde étant destinée à mesurer des paramètres de performances de l'infrastructure informatique dans des zones réseau définies dans le fichier de configuration.

Avantageusement, cette méthode comprend en outre une étape de collecte d'informations par l'ordonnanceur, ces informations comprenant les paramètres de performances mesurés par chacune des sondes durant l'injection de requêtes par les injecteurs, ainsi que des journaux d'historique d'événements enregistrés par chaque injecteur.

Avantageusement, cette méthode comprend en outre une étape de génération par l'ordonnanceur d'un rapport de tir relatif aux performances de l'infrastructure informatique à partir des informations collectées.

Il est proposé, selon un troisième aspect, un produit programme d'ordinateur implémenté sur un support mémoire, susceptible d'être mis en oeuvre au sein d'une unité de traitement informatique et comprenant des instructions pour la mise en oeuvre de la méthode résumée ci-dessus.

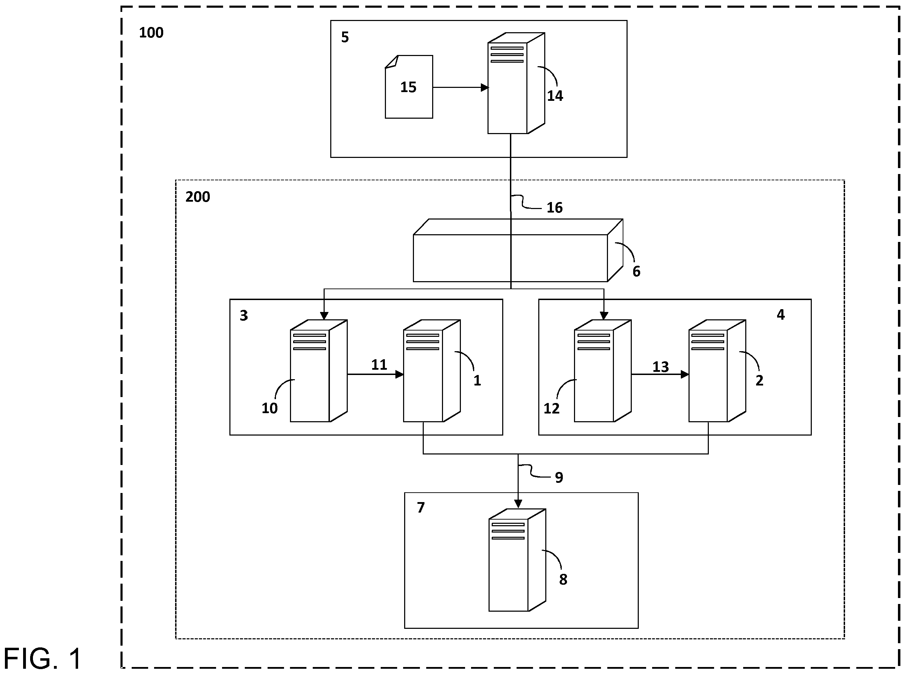

D'autres objets et avantages de l'invention apparaîtront à la lumière de la description d'un mode de réalisation, faite ci-après en référence au dessin annexé, dans lequel la figure 1 est une figure illustrant un système de test de performances d'une infrastructure informatique selon un mode de réalisation.

Sur la figure **1** est représenté un système **100** de test de performances d'une infrastructure **200** informatique. Avantageusement, l'infrastructure **200** informatique comprend un ensemble de ressources matérielles (ex : serveurs, bases de données) et/ou logicielles (ex : applications proposant un ou plusieurs services) interconnectées de manière prédéfinie et dont les performances sont à tester. A titre d'exemples, les performances évaluées par le système **100** de test de performances se rapportent à une bande-passante, des débits, une qualité de service, et/ou encore un temps de réponse fourni(s) par une application ou un serveur dans l'infrastructure **200** informatique en réponse à une requête.

Ainsi, dans le mode de réalisation représenté sur la figure **1**, l'infrastructure **200** informatique comprend
- au moins une première application **1** proposant un service de type « service clientèle » dit « *front-office* » ;
- au moins une deuxième application **2** proposant un service de type « service d'appui » dit « *back-office* ».

Selon divers modes de réalisation, la première application 1 et la deuxième application **2** se rapportent à différents services d'une même application, ou sont deux applications distinctes proposant différents services. La première application **1** et la deuxième application **2** sont, à titre d'exemples, une application Web, une application de messagerie ou encore une plateforme de calcul, mise en oeuvre dans un ou plusieurs serveurs et/ou bases de données (non-représentés) de l'infrastructure **200** informatique.

Avantageusement, la première application **1** et la deuxième application **2** sont respectivement déployées dans une première zone **3** réseau et une deuxième zone **4** réseau distinctes. La première zone **3** réseau et la deuxième zone **4** réseau peuvent être des zones distinctes d'un même réseau informatique, ou des zones distinctes de réseaux informatiques distincts interconnectés, le ou les réseaux informatiques étant constitutifs de l'infrastructure **200** informatique.

Ainsi, la première zone **3** réseau et la deuxième zone **4** réseau comprennent des méthodes d'accès différentes avec des niveaux de sécurité distincts. A titre d'exemple, la première zone **3** réseau est une DMZ (acronyme anglais de « *demilitarized zone* ») Intranet et la deuxième zone **4** réseau est une DMZ Internet, ces zones étant séparées d'une troisième zone **5** réseau, par l'intermédiaire d'au moins un équipement **6** de sécurité, par exemple un pare-feu dit couramment « *firewall* »*.*

A titre d'exemple, sur la figure **1****,** la troisième zone **5** réseau est un réseau local (ex : un réseau bureautique) externe à l'infrastructure **200,** communicant avec elle par l'intermédiaire de l'équipement **6** de sécurité. Ce dernier, sert alors de point d'entrée et de protection pour l'infrastructure **200** informatique, plus précisément pour l'accès à la première zone **3** réseau et la deuxième zone **4** réseau. Dans un autre exemple, la troisième zone **5** réseau est mise en oeuvre dans l'infrastructure **200** informatique et communique, non nécessairement via l'intermédiaire de l'équipement **6** de sécurité, avec la première zone **3** réseau et la deuxième zone **4** réseau.

Par ailleurs, la première application **1** et la deuxième application **2** peuvent éventuellement communiquer/échanger des données avec d'autres zones réseau mises en oeuvre dans l'infrastructure **200** informatique. Ainsi, sur la figure **1****,** l'infrastructure **200** informatique comprend une quatrième zone **7** réseau, par exemple une DMZ de données. Dans cet exemple, la quatrième zone **7** réseau comprend au moins un moyen **8** de persistance de données, tel une base de données ou un serveur, configuré pour assurer la persistance de données **9** transmises par la première application **1** et la deuxième application **2.**

L'infrastructure **200** informatique comprend, par ailleurs, des moyens de tests de performances. Avantageusement, ces moyens comprennent des injecteurs configurés pour stresser suivant des scénarios de tests de performances prédéfinis différentes zones réseau de l'infrastructure **200** informatique, via l'injection de requêtes. A titre d'exemple, sur la figure 1, la première zone **3** réseau comprend un premier injecteur **10** en charge d'envoyer un premier flux d'injection **11** de requêtes à destination de la première application **1,** et la deuxième zone **4** réseau comprend un deuxième injecteur **12** en charge d'envoyer un deuxième flux **13** d'injection de requêtes à destination de la deuxième application **2.**

Sur la figure 1, le système **100** de test de performances comprend, en outre, dans la troisième zone **5** réseau un ordonnanceur **14** réalisé, à titre d'exemple, sous la forme d'un composant logiciel installé sur un terminal informatique ou sur une machine virtuelle.

Avantageusement, l'ordonnanceur **14** permet à partir de la lecture d'un fichier **15** de configuration qui lui est fournit en entrée, de déployer, c'est-à-dire installer à distance, puis commander individuellement des injecteurs et des sondes dans le système **100** de test de performances.

A titre d'exemple, sur la figure 1, l'ordonnanceur **14** lit le fichier **15** de configuration, puis en fonction de cette lecture déploie, c'est-à-dire installe sur une ressource distante, le premier injecteur **10** dans la première zone **3** réseau et le deuxième injecteur **12** dans la deuxième zone **4** réseau. L'ordonnanceur **14** commande ensuite individuellement le premier injecteur **10** et le deuxième injecteur **12** via une liaison **16** de donnée sécurisée, pouvant être établie lors du déploiement des injecteurs **10, 12,** par exemple via une liaison de type SSH ou FTP, établie au travers de l'équipement **6** de sécurité vers la première zone **3** réseau et la deuxième zone **4** réseau. La commande des injecteurs **10, 12** et des sondes par l'ordonnanceur **14** permet alors, à titre d'exemples
- de spécifier à chaque injecteur **10, 12** les paramètres d'un scénario de test de performances prédéfini à exécuter ;
- de requêter la transmission à l'ordonnanceur **14** de mesures ou de fichiers logs enregistrés par chaque injecteur **10, 12** et/ou sonde ;
- de piloter la suppression des injecteurs **10, 12** et/ou sondes, par exemples lorsque l'ensemble des scénarios de test spécifiés à chaque injecteur **10, 12** ont été réalisés, ou en cas de d'erreur au niveau d'une sonde ou d'un scénario de test de performances.

Avantageusement, les sondes déployées et commandées par l'ordonnanceur **14** permettent de mesurer des paramètres de performances dans l'infrastructure **200** informatique, notamment les performances de ressources logicielles (ex : applications) et/ou matérielles (ex : serveurs) de cette infrastructure. A titre d'exemples, ces sondes sont
- des sondes réseau configurées pour détecter, déterminer, analyser des paramètres associées à des flux de données d'applications. Ces paramètres comprennent couramment des adresses IP, des numéros de ports de destination et/ou de provenance, de paquets liés à des applications ;
- des sondes de ressources configurées pour mesurer des paramètres matériels tels la volumétrie, le temps de traitement d'une donnée ou d'une requête réceptionnée, un taux d'occupation de cache de processeur, l'utilisation de la mémoire vive, la bande passante utilisée par une application.

Avantageusement, le fichier **15** de configuration est établi au préalable par l'utilisateur du système **100** de test de performances et fourni à l'ordonnanceur **14.** Le fichier **15** de configuration est, par exemples, construit manuellement par l'utilisateur ou généré à partir d'une interface graphique appropriée, apte à permettre la saisie de paramètres de configuration.

Avantageusement, le fichier **15** de configuration comprend, notamment les paramètres de configuration suivants
- une liste prédéterminée d'injecteurs **10, 12** à utiliser. Chaque injecteur **10, 12** est, à titre d'exemple, spécifié/identifié via une adresse IP, des identifiants de connexion (ex : identifiant, mot de passe), un répertoire de déploiement se rapportant à une ressource matérielle (ex : serveur, base de données) sur laquelle il doit être installé ;
- un paramétrage pour chaque injecteur **10, 12** utilisé. Ce paramétrage, peut comprendre
   ∘ la spécification d'un instant et/ou d'un intervalle temporel pour autoriser l'installation et/ou l'utilisation dudit injecteur **10, 12 ;**
   ∘ la spécification d'un scénario de test de performances à exécuter sur un injecteur **10, 12** prédéterminé. Par exemples, une liste d'action à exécuter via des requêtes, la durée d'un scénario de test de performances, un nombre prédéterminé d'utilisateurs à simuler, la volumétrie dudit scénario (ex : débit d'injection de charge, trafic utilisateur, nombre de requêtes), une description de paramètres d'exécution à utiliser pour des requêtes envoyées à destination d'une ou plusieurs application prédéterminées ;
- une liste prédéterminée de sondes à utiliser. Chaque sonde est, à titre d'exemple, spécifiée via une adresse IP, des identifiants de connexion (ex : identifiant, mot de passe), un répertoire de déploiement se rapportant à une ressource matérielle (ex : serveur) sur laquelle elle sera installée ;
- pour chaque sonde utilisée des paramètres de configuration, par exemple le type de sonde à utiliser (ex : sonde de ressource, sonde réseau), la fréquence des mesures, la durée totale des mesures, un nombre maximum de journaux d'historique d'événements (fichiers logs) à enregistrer durant l'exécution d'un scénario de test de performances, la sélection d'applications spécifiques à superviser en vue d'évaluer leurs performances (ex : identifiées/spécifiées via un numéro de port spécifique) ou encore un type spécifique d'erreur à collecter ou filtrer.

Dans un mode de réalisation, des injecteurs et des sondes peuvent éventuellement être intégrés dans un même outil de test de performances tel JMeter® et sont alors paramétrés conjointement.

Selon divers modes de réalisation, l'ordonnanceur **14** est configuré pour réaliser les opérations suivantes :
- recevoir le fichier **15** de configuration ;
- lire le fichier **15** de configuration ;
- installer/déployer en fonction du résultat de la lecture du fichier **15** de configuration des sondes et des injecteurs **10, 12** dans des zones prédéterminées de l'infrastructure **200** informatique ;
- configurer en fonction de la lecture du fichier **15** de configuration les injecteurs **10, 12** et les sondes déployées;
- commander pour chaque injecteur **10, 12** l'exécution et l'arrêt de son propre scénario de test de performances, spécifié dans le fichier **15** de configuration. Avantageusement, les injecteurs **10, 12** peuvent être commandés de manière synchrone ou décalée, en fonction de paramètres temporels spécifiés dans le fichier **15** de configuration ;
- collecter des informations comprenant
   ∘ les données mesurées par chacune des sondes durant l'injection de requêtes par les injecteurs **10, 12 ;**
   ∘ les fichiers de configuration et journaux d'historique d'événements (fichiers logs) de chaque injecteur **10, 12 ;**
- supprimer les sondes et les injecteurs **10, 12** à l'issue de l'exécution de l'ensemble des scénarios de tests ;
- regrouper, structurer et analyser les informations collectées ;
- générer en fonction du résultat de l'analyse des informations collectées, un rapport de tir concernant les performances des applications spécifiées dans le fichier **15** de configuration, ou plus généralement un rapport de tir relatif aux performances de l'infrastructure **200** informatique.

Dans un mode de réalisation, les informations des sondes et des injecteurs **10, 12,** sont collectées par l'ordonnanceur **14** en temps réel, à une fréquence prédéfinie, au fur et à mesure de l'exécution des scénarios de tests de performances par les injecteurs **10, 12.** Dans un autre mode de réalisation, l'ensemble de ces informations sont collectées par l'ordonnanceur **14** à l'issue de l'exécution de l'ensemble des scénarios de test de performances. A titre d'exemple, l'ordonnanceur **14** crée, enregistre, et complète au fur et à mesure un fichier structurant l'ensemble données retournées en temps réel par chacune des sondes et chacun des injecteurs **10, 12.** Dans un autre exemple, chaque sonde et/ou injecteur **10, 12** enregistre dans une base de données son propre fichier de log et retourne ce dernier à l'issue de l'exécution de l'ensemble des scénarios de test sur chacun des injecteurs **10, 12.**

Selon divers modes de réalisation, l'ordonnanceur **14** est configuré pour comparer une ou plusieurs informations qui lui sont retournées au cours de l'exécution d'un ou plusieurs scénarios de test de performances, avec une ou plusieurs informations connues. Les informations connues sont, à titre d'exemple, des informations préenregistrées dans l'ordonnanceur **14** ou spécifiées dans le fichier **15** de configuration, se rapportant à des seuils prédéterminés définissant le fonctionnement nominal et/ou erratique d'un scénario de test de performances, et/ou d'applications prédéterminées (ex : temps de réponse, débits attendus).

Par exemple, l'utilisateur du système **100** de test de performances spécifie dans le fichier **15** de configuration des seuils permettant la détection éventuelle d'anomalies de consommation de ressources, tels
- des valeurs minimales et/ou maximales de pourcentage d'utilisation de ressources matérielles par des ressources logicielles à tester (ex : taux d'occupation des processeurs CPUs et/ou de la mémoire RAM, temps de latence, pertes de paquets), définissant des intervalles de bon fonctionnement et d'anomalies pour ces ressources ;
- des pourcentages de variation(s) autorisée(s) de ressource(s) en fonction d'un ou plusieurs intervalles de temps prédéfinis ;
- d'un ou plusieurs seuils temporels au-delà duquel la valeur ou la variation d'une ressource est considérée comme une anomalie.

Dans un autre exemple, ces informations sont préenregistrées dans l'ordonnanceur **14** et donc connues de celui-ci. La spécification de ces informations n'est alors pas nécessaire dans le fichier **15** de configuration.

Ainsi, dans un mode de réalisation, l'ordonnanceur **14** compare les informations qui lui sont retournées avec des informations prédéterminées, et peut en fonction du résultat de cette comparaison, détecter une ou plusieurs erreurs au niveau d'une application ou du scénario de tests de performances exécuté par un injecteur **10, 12.** Par exemple, en cas de détection d'erreur, l'ordonnanceur **14** peut décider d'arrêter un injecteur et le réinitialiser. En outre, la comparaison des informations collectées par l'ordonnanceur **14** avec des informations prédéterminées, en temps réel ou à l'issue de l'exécution de l'ensemble des scénarios de tests, permet à l'ordonnanceur **14** de générer en fonction du résultat de cette comparaison, le rapport de tir concernant les performances des applications prédéterminées (spécifiées dans le fichier dans le fichier **15** de configuration), ou plus généralement des performances de l'infrastructure **200** informatique.

Avantageusement, l'ensemble des modes de réalisations décrits ci-dessus permettent d'assurer un accès différencié à tout injecteur **10, 12** déployé dans l'infrastructure **200** informatique, et ce quelque soit sa zone réseau de déploiement. Ceci est rendu possible grâce à l'utilisation de l'ordonnanceur **14** qui est apte à installer, configurer et commander individuellement tout injecteur **10, 12** ou sonde dans l'infrastructure **200** informatique.

On peut, ainsi, attribuer via le fichier **15** de configuration un paramétrage propre à chaque injecteur **10, 12,** par exemple un scénario de test de performances spécifique. Il est ainsi possible de jouer sur la distribution de charge proposée par chaque injecteur **10,12,** notamment, de simuler de manière distincte un comportement utilisateur, ainsi qu'un nombre d'utilisateurs prédéterminé.

Une telle configuration est particulièrement avantageuse, car il est alors possible de contrôler, individuellement et simultanément, différents injecteurs **10, 12** déployés en différentes zones réseaux de l'infrastructure **200** informatique.

Avantageusement, ceci permet d'affiner la précision des tests de performances dans l'infrastructure **200** informatique, notamment en réalisant simultanément des tests de performances sur des services de type « *front-office* » et « *back-office* ». Il est ainsi possible de valider les performances, notamment la qualité de service, de toute ressource matérielle ou logicielle supportant différents niveaux d'utilisation.

## Revendications

1. Système (100) de test de performances d'une infrastructure (200) informatique, cette infrastructure (200) informatique comprenant une première application (1) déployée dans une première zone (3) réseau de l'infrastructure (200) informatique et une deuxième application (2) déployée dans une deuxième zone (4) réseau de l'infrastructure (200) informatique, cette deuxième zone (4) réseau étant distincte de la première zone (3) réseau, ce système (100) comprenant
- un ordonnanceur (14) compris dans une troisième zone (5)' réseau communicante avec la première zone (3) réseau et la deuxième (4) zone réseau ;
- un premier injecteur (10) compris dans la première zone (3) réseau et destiné à injecter, suivant un premier scénario de test de performances prédéfini, des requêtes à destination de la première application (1) ; et
- un deuxième injecteur (12) compris dans la deuxième zone (4) réseau et destiné à injecter, suivant un deuxième scénario de test de performances prédéfini, des requêtes à destination de la deuxième application (2),
l'ordonnanceur (14) étant configuré pour
- installer le premier injecteur (10) dans la première zone (3) réseau de l'infrastructure (200) informatique et le deuxième injecteur (12) dans la deuxième zone (4) réseau de l'infrastructure (200) informatique en fonction d'un fichier (15) de configuration fourni en entrée de l'ordonnanceur (14), le ficher de configuration spécifiant la première zone réseau et la deuxième zone réseau;
- communiquer au premier injecteur (10) un premier scénario de test de performances prédéfini, ce premier scénario de test de performances prédéfini étant propre au premier injecteur (10) et à la première zone (3) réseau, le premier scénario de test de performances prédéfini étant spécifié dans le fichier (15) de configuration fourni en entrée de l'ordonnanceur (14) ; et
- communiquer au deuxième injecteur (12) un deuxième scénario de test de performances prédéfini, ce deuxième scénario de test de performances prédéfini étant propre au deuxième injecteur (12) et à la deuxième zone (4) réseau, le deuxième scénario de test de performances prédéfini étant spécifié dans le fichier (**15**) de configuration fourni en entrée de l'ordonnanceur (**14**)**.**

2. Système (**100**) selon la revendication 1, dans lequel le fichier (**15**) de configuration comprend en outre la spécification d'une première sonde et d'une deuxième sonde destinées à mesurer des paramètres de performances de l'infrastructure (**200**) informatique, respectivement, dans la première zone (**3**) réseau et la deuxième zone (**4**) réseau, l'ordonnanceur (**14**) étant en outre configuré pour installer et configurer cette première sonde et cette deuxième sonde en fonction de la lecture du fichier (**15**) de configuration.

3. Système (**100**) selon la revendication 1 ou la revendication 2, dans lequel l'ordonnanceur (**14**) est en outre configuré pour commander, en fonction de la lecture du fichier (**15**) de configuration, pour le premier injecteur (**10**) l'exécution et l'arrêt du premier scénario de test de performances prédéfini et pour le deuxième injecteur (**12**) l'exécution et l'arrêt du deuxième scénario de test de performances prédéfini.

4. Système (**100**) selon la revendication 2 ou la revendication 3, dans lequel l'ordonnanceur (**14**) est en outre configuré pour collecter des informations comprenant les paramètres de performances mesurés par la première sonde et par la deuxième sonde durant l'injection de requêtes par le premier injecteur (**10**) et par le deuxième injecteur (**12**), ainsi que des journaux d'historique d'événements enregistrés par le premier injecteur (**10**) et par le deuxième injecteur (**12**).

5. Système (**100**) selon la revendication 4, dans lequel l'ordonnanceur (**14**) est en outre configuré pour générer à partir des informations collectées, un rapport de tir relatif aux performances de l'infrastructure (**200**) informatique.

6. Méthode de test de performances d'une infrastructure (**200**) informatique, cette infrastructure (**200**) informatique comprenant une première application (**1**) déployée dans une première zone (**3**) réseau de l'infrastructure (**200**) informatique et une deuxième application (**2**) déployée dans une deuxième zone (**4**) réseau de l'infrastructure (**200**) informatique, cette deuxième zone (**4**) réseau étant distincte de la première zone (**3**) réseau, cette méthode comprenant
- une étape de réception par un ordonnanceur (14) compris dans une troisième zone (5) réseau communicante avec la première zone (3) réseau et la deuxième zone (4) réseau d'un fichier (15) de configuration, le fichier (15) de configuration spécifiant la première zone (3) réseau et la deuxième zone (4) réseau, pour l'installation d'un premier injecteur (10) dans la première zone (3) réseau et d'un deuxième injecteur(12) dans la deuxième zone (4) réseau, le premier injecteur (10) étant destiné à injecter, suivant un premier scénario de test de performances prédéfini dans le fichier (15) de configuration, des requêtes à destination de la première application (1) et le deuxième injecteur (12) étant destiné à injecter, suivant un deuxième scénario de test de performances prédéfini dans le fichier (15) de configuration, des requêtes à destination de la deuxième application (2), le premier scénario de test de performances prédéfini étant propre au premier injecteur (10) et à la première zone (3) réseau, le deuxième scénario de test de performances prédéfini étant propre au deuxième injecteur (12) et à la deuxième zone (4) réseau ;
- une étape de lecture du fichier (15) de configuration par l'ordonnanceur (14) ; en fonction de la lecture du fichier (15) de configuration
- une étape d'installation et de configuration du premier injecteur (10) et du deuxième injecteur (12) par l'ordonnanceur (14) ;
- une étape effectuée par l'ordonnanceur de communication au premier injecteur (10) du premier scénario de test de performances prédéfini et de communication au deuxième injecteur (12) du deuxième scénario de test de performances prédéfini ;I
- une étape de commande du premier injecteur (10) et du deuxième injecteur (12) par l'ordonnanceur (14), commandant l'exécution et l'arrêt du premier scénario de tests de performances prédéfini pour le premier injecteur (10) et l'exécution et l'arrêt du deuxième scénario de tests de performances prédéfini pour le deuxième injecteur (12).

7. Méthode selon la revendication 6, comprenant en outre une étape d'installation et de configuration d'une première sonde et d'une deuxième sonde par l'ordonnanceur (14), en fonction de la lecture du fichier (15) de configuration, la première sonde étant destinée à mesurer des paramètres de performances de l'infrastructure (200) informatique dans la première zone (3) réseau spécifiée dans le fichier (15) de configuration et la deuxième sonde étant destinée à mesurer des paramètres de performances de l'infrastructure (200) informatique dans la deuxième zone (4) réseau spécifiée dans le fichier (15) de configuration.

8. Méthode selon la revendication 7, comprenant en outre une étape de collecte d'informations par l'ordonnanceur (14), ces informations comprenant les paramètres de performances mesurés par la première sonde et par la deuxième sonde durant l'injection de requêtes par le premier injecteur (**10**) et par le deuxième injecteur (**12**)**,** ainsi que des journaux d'historique d'événements enregistrés par le premier injecteur (**10**) et par le deuxième injecteur (**12**).

9. Méthode selon la revendication 8, comprenant en outre une étape de génération par l'ordonnanceur (**14**) d'un rapport de tir relatif aux performances de l'infrastructure (**200**) informatique à partir des informations collectées.

10. Produit programme d'ordinateur implémenté sur un support mémoire, susceptible d'être mis en oeuvre au sein d'une unité de traitement informatique et comprenant des instructions pour la mise en oeuvre d'une méthode selon l'une des revendications 6 à 9.

## Patentansprüche

1. System (100) zum Testen der Leistung einer Datenverarbeitungs-Infrastruktur (200), wobei diese Datenverarbeitungs-Infrastruktur (200) eine erste Anwendung (1), die in einer ersten Netzzone (3) der Datenverarbeitungs-Infrastruktur (200) angewendet wird, und eine zweite Anwendung (2), die in einer zweiten Netzzone (4) der Datenverarbeitungs-Infrastruktur (200) angewendet wird, enthält, wobei diese zweite Netzzone (4) von der ersten Netzzone (3) verschieden ist, wobei dieses System (100) Folgendes umfasst:
- eine Anweisungsausgabeeinrichtung (14), die in einer dritten Netzzone (5) enthalten ist, die mit der ersten Netzzone (3) und mit der zweiten Netzzone (4) kommuniziert;
- einen ersten Injektor (10), der in der ersten Netzzone (3) enthalten ist und dazu bestimmt ist, entsprechend einem im Voraus definierten ersten Szenario zum Testen der Leistung Anforderungen an die erste Anwendung (1) zu injizieren; und
- einen zweiten Injektor (12), der in der zweiten Netzzone (4) enthalten ist und dazu bestimmt ist, gemäß einem im Voraus definierten zweiten Szenario zum Testen der Leistung Anforderungen an die zweite Anwendung (2) zu injizieren,
wobei die Anweisungsausgabeeinrichtung (14) konfiguriert ist:
- als Funktion einer Konfigurationsdatei (15), die an den Eingang der Anweisungsausgabeeinrichtung (14) geliefert wird, den ersten Injektor (10) in der ersten Netzzone (3) der Datenverarbeitungs-Infrastruktur (200) zu installieren und den zweiten Injektor (12) in der zweiten Netzzone (4) der Datenverarbeitungs-Infrastruktur (200) zu installieren, wobei die Konfigurationsdatei die erste Netzzone und die zweite Netzzone spezifiziert;
- an den ersten Injektor (10) ein erstes im Voraus definiertes Szenario zum Testen der Leistung zu übermitteln, wobei dieses erste im Voraus definierte Szenario zum Testen der Leistung zu dem ersten Injektor (10) und zu der ersten Netzzone (3) gehört, wobei das erste im Voraus definierte Szenario zum Testen der Leistung in der Konfigurationsdatei (15), die an den Eingang der Anweisungsausgabeeinrichtung (14) geliefert wird, spezifiziert ist; und
- an den zweiten Injektor (12) ein zweites im Voraus definiertes Szenario zum Testen der Leistung zu übermitteln, wobei dieses zweite im Voraus definierte Szenario zum Testen der Leistung zu dem zweiten Injektor (12) und zu der zweiten Netzzone (4) gehört, wobei das zweite im Voraus definierte Szenario zum Testen der Leistung in der Konfigurationsdatei (15), die an den Eingang der Anweisungsausgabeeinrichtung (14) geliefert wird, spezifiziert ist.

2. System (100) nach Anspruch 1, wobei die Konfigurationsdatei (15) außerdem die Spezifikation einer ersten Sonde und einer zweiten Sonde enthält, die dazu bestimmt sind, Leistungsparameter der Datenverarbeitungs-Infrastruktur (200) in der ersten Netzzone (3) bzw. in der zweiten Netzzone (4) zu messen, wobei die Anweisungsausgabeeinrichtung (14) außerdem konfiguriert ist, diese erste Sonde und diese zweite Sonde als Funktion des Lesens der Konfigurationsdatei (15) zu installieren und zu konfigurieren.

3. System (100) nach Anspruch 1 oder Anspruch 2, wobei die Anweisungsausgabeeinrichtung (14) außerdem konfiguriert ist, als Funktion des Lesens der Konfigurationsdatei (15) für den ersten Injektor (10) das Ausführen und Anhalten des ersten im Voraus definierten Szenarios zum Testen der Leistung und für den zweiten Injektor (12) das Ausführen und Anhalten des zweiten im Voraus definierten Szenarios zum Testen der Leistung zu steuern.

4. System (100) nach Anspruch 2 oder Anspruch 3, wobei die Anweisungsausgabeeinrichtung (14) außerdem konfiguriert ist, Informationen zu sammeln, die die von der ersten Sonde und von der zweiten Sonde während der Injektion von Anforderungen durch den ersten Injektor (10) und den zweiten Injektor (12) gemessenen Leistungsparameter sowie Berichte über die Ereignishistorie, die durch den ersten Injektor (10) und den zweiten Injektor (12) aufgezeichnet werden, enthalten.

5. System (100) nach Anspruch 4, wobei die Anweisungsausgabeeinrichtung (14) außerdem konfiguriert ist, anhand der gesammelten Informationen eine Trefferliste ["rapport de tir"] bezüglich der Leistungen der Datenverarbeitungs-Infrastruktur (200) zu erzeugen.

6. Verfahren zum Testen der Leistung einer Datenverarbeitungs-Infrastruktur (200), wobei diese Datenverarbeitungs-Infrastruktur (200) eine erste Anwendung (1), die in einer ersten Netzzone (3) der Datenverarbeitungs-Infrastruktur (200) angewendet wird, und eine zweite Anwendung (2), die in einer zweiten Netzzone (4) der Datenverarbeitungs-Infrastruktur (200) angewendet wird, enthält, wobei diese zweite Netzzone (4) von der ersten Netzzone (3) verschieden ist, wobei dieses Verfahren Folgendes umfasst:
- einen Schritt des Empfangens durch eine Anweisungsausgabeeinrichtung (14), die in einer dritten Netzzone (5) enthalten ist, die mit der ersten Netzzone (3) und mit der zweiten Netzzone (4) kommuniziert, einer Konfigurationsdatei (15), wobei die Konfigurationsdatei (15) die erste Netzzone (3) und die zweite Netzzone (4) spezifiziert, um in der ersten Netzzone (3) einen ersten Injektor (10) und in der zweiten Netzzone (4) einen zweiten Injektor (12) zu installieren, wobei der erste Injektor (10) dazu bestimmt ist, gemäß einem ersten in der Konfigurationsdatei (15) im Voraus definierten Szenario zum Testen der Leistung Anforderungen an die erste Anwendung (1) zu injizieren, und der zweite Injektor (12) dazu bestimmt ist, gemäß einem zweiten in der Konfigurationsdatei (15) im Voraus definierten Szenario zum Testen der Leistung Anforderungen an die zweite Anwendung (2) zu injizieren, wobei das erste im Voraus definierte Szenario zum Testen der Leistung zu dem ersten Injektor (10) und der ersten Netzzone (3) gehört und das zweite im Voraus definierte Szenario zum Testen der Leistung zu dem zweiten Injektor (12) und der zweiten Netzzone (4) gehört;
- einen Schritt des Lesens der Konfigurationsdatei (15) durch die Anweisungseinrichtung (14) als Funktion des Lesens der Konfigurationsdatei (15);
- einen Schritt des Installierens und Konfigurierens des ersten Injektors (10) und des zweiten Injektors (12) durch die Anweisungsausgabeeinrichtung (14);
- einen Schritt, der durch die Anweisungsausgabeeinrichtung ausgeführt wird, zum Übermitteln zu dem ersten Injektor (10) des ersten im Voraus definierten Szenarios zum Testen der Leistung und zum Übermitteln an den zweiten Injektor (12) des zweiten im Voraus definierten Szenarios zum Testen der Leistung;
- einen Schritt des Steuerns des ersten Injektors (10) und des zweiten Injektors (12) durch die Anweisungsausgabeeinrichtung (14), der das Ausführen und Anhalten des ersten im Voraus definierten Szenarios zum Testen der Leistung für den ersten Injektor (10) und das Ausführen und Anhalten des zweiten im Voraus definierten Szenarios zum Testen der Leistung für den zweiten Injektor (12) steuert.

7. Verfahren nach Anspruch 6, das außerdem einen Schritt des Installierens und Konfigurierens einer ersten Sonde und einer zweiten Sonde durch die Anweisungsausgabeeinrichtung (14) als Funktion des Lesens der Konfigurationsdatei (15) umfasst, wobei die erste Sonde dazu bestimmt ist, Parameter der Leistung der Datenverarbeitungs-Infrastruktur (200) in der durch die Konfigurationsdatei (15) spezifizierten ersten Netzzone (3) zu messen, und die zweite Sonde dazu bestimmt ist, Parameter der Leistung der Datenverarbeitungs-Infrastruktur (200) in der in der Konfigurationsdatei (15) spezifizierten zweiten Netzzone (4) zu messen.

8. Verfahren nach Anspruch 7, das außerdem einen Schritt des Sammelns von Informationen durch die Anweisungsausgabeeinrichtung (14) umfasst, wobei diese Informationen die durch die erste Sonde und durch die zweite Sonde während der Injektion von Anforderungen durch den ersten Injektor (10) und durch den zweiten Injektor (12) gemessenen Leistungsparameter sowie Berichte über die Ereignishistorie, die durch den ersten Injektor (10) und durch den zweiten Injektor (12) aufgezeichnet werden, umfassen.

9. Verfahren nach Anspruch 8, das außerdem einen Schritt des Erzeugens durch die Anweisungsausgabeeinrichtung (14) einer Trefferliste bezüglich der Leistungen der Datenverarbeitungs-Infrastruktur (200) anhand der gesammelten Informationen umfasst.

10. Computerprogrammprodukt, das auf einem Speicherträger implementiert ist und in einer Datenverarbeitungseinheit ausgeführt werden kann und Anweisungen für die Ausführung eines Verfahrens nach einem der Ansprüche 6 bis 9 enthält.

## Claims

1. System (100) for testing performance of a computer infrastructure (200), this computer infrastructure (200) comprising a first application (1) deployed in a first network zone (3) of the computer infrastructure (200) and a second application (2) deployed in a second network zone (4) of the computer infrastructure (200), this second network zone (4) being distinct from the first network zone (3), this system (100) comprising
- a scheduler (14) included in a third network zone (5) communicating with the first network zone (3) and the second network zone (4);
- a first injector (10) included in the first network zone (3) and intended to inject, according to a first predefined performance test scenario, requests destined for the first application (1); and
- a second injector (12) included in the second network zone (4) and intended to inject, according to a second predefined performance test scenario, requests destined for the second application (2); and
the scheduler (14) being configured to
- install the first injector (10) in the first network zone (3) of the computer infrastructure (200) and the second injector (12) in the second network zone (4) of the computer infrastructure (200) as a function of a configuration file (15) provided as input to the scheduler (14), the configuration file specifying the first network zone and the second network zone;
- communicate to the first injector (10) a first predefined performance test scenario, this first predefined performance test scenario being specific to the first injector (10) and to the first network zone (3), the first predefined performance test scenario being specified in the configuration file (15) provided as input to the scheduler (14); and
- communicate to the second injector (12) a second predefined performance test scenario, this second predefined performance test scenario being specific to the second injector (12) and to the second network zone (4), the second predefined performance test scenario being specified in the configuration file (15) provided as input to the scheduler (14).

2. System (100) according to Claim 1, in which the configuration file (15) furthermore comprises the specification of a first probe and of a second probe which are intended to measure performance parameters of the computer infrastructure (200), respectively, in the first network zone (3) and the second network zone (4), the scheduler (14) furthermore being configured to install and configure this first probe and this second probe as a function of the reading of the configuration file (15).

3. System (100) according to Claim 1 or Claim 2, in which the scheduler (14) is furthermore configured to command, as a function of the reading of the configuration file (15), for the first injector (10) the execution and the stopping of the first predefined performance test scenario and for the second injector (12) the execution and the stopping of the second predefined performance test scenario.

4. System (100) according to Claim 2 or Claim 3, in which the scheduler (14) is furthermore configured to collect information comprising the performance parameters measured by the first probe and by the second probe during the injection of requests by the first injector (10) and by the second injector (12), as well as journals of history of events recorded by the first injector (10) and by the second injector (12).

5. System (100) according to Claim 4, in which the scheduler (14) is furthermore configured to generate on the basis of the information collected, a load report relating to the performance of the computer infrastructure (200).

6. Method for testing performance of a computer infrastructure (200), this computer infrastructure (200) comprising a first application (1) deployed in a first network zone (3) of the computer infrastructure (200) and a second application (2) deployed in a second network zone (4) of the computer infrastructure (200), this second network zone (4) being distinct from the first network zone (3), this method comprising
- a step of reception by a scheduler (14) included in a third network zone (5) communicating with the first network zone (3) and the second network zone (4) of a configuration file (15), the configuration file (15) specifying the first network zone (3) and the second network zone (4), for the installation of a first injector (10) in the first network zone (3) and of a second injector (12) in the second network zone (4), the first injector (10) being intended to inject, according to a first performance test scenario predefined in the configuration file (15), requests destined for the first application (1) and the second injector (12) being intended to inject, according to a second performance test scenario predefined in the configuration file (15), requests destined for the second application (2), the first predefined performance test scenario being specific to the first injector (10) and to the first network zone (3), the second predefined performance test scenario being specific to the second injector (12) and to the second network zone (4);
- a step of reading of the configuration file (15) by the scheduler (14);
as a function of the reading of the configuration file (15)
- a step of installation and configuration of the first injector (10) and the second injector (12) by the scheduler (14);
- a step performed by the scheduler of communication to the first injector (10) of the first predefined performance test scenario and of communication to the second injector (12) of the second predefined performance test scenario;
- a step of command of the first injector (10) and of the second injector (12) by the scheduler (14), commanding the execution and the stopping of the first performance test scenario predefined for the first injector (10) and the execution and the stopping of the second performance test scenario predefined for the second injector (12).

7. Method according to Claim 6, furthermore comprising a step of installation and configuration of a first probe and of a second probe by the scheduler (14), as a function of the reading of the configuration file (15), the first probe being intended to measure performance parameters of the computer infrastructure (200) in the first network zone (3) specified in the configuration file (15) and the second probe being intended to measure performance parameters of the computer infrastructure (200) in the second network zone (4) specified in the configuration file (15).

8. Method according to Claim 7, furthermore comprising a step of collecting of information by the scheduler (14), this information comprising the performance parameters measured by the first probe and by the second probe during the injection of requests by the first injector (10) and by the second injector (12), as well as journals of history of events recorded by the first injector (10) and by the second injector (12).

9. Method according to Claim 8, furthermore comprising a step of generation by the scheduler (14) of a load report relating to the performance of the computer infrastructure (200) on the basis of the information collected.

10. Computer program product implemented on a memory medium, able to be implemented within a computer processing unit and comprising instructions for the implementation of a method according to one of Claims 6 to 9.
